# FASCICULE DE BREVET EUROPEEN

(11) **EP 2 719 520 B1**
(45) Date de publication et mention de la délivrance du brevet: **13.04.2016**
(21) Numéro de dépôt: 13188118.7
(22) Date de dépôt: 10.10.2013
(51) Int. Cl.: B29C 70/48, B29C 33/00, B29C 33/10

(54) **Moule, connecteur spécialement adapté pour être utilisé dans un tel moule, installation et procédé de moulage mettant en oeuvre un tel moule**
Form, speziell angepasstes Verbindungselement zur Verwendung in einer solchen Form, und Formgussverfahren, bei dem eine solche Form zum Einsatz kommt
Mould, connector especially adapted for use in such a mould, moulding facility and method using such a mould

(30) Priorité: 10.10.2012 FR 1259681
(43) Date de publication de la demande: 16.04.2014
(73) Titulaire: Compose, 01100 Bellignat (FR); Isojet Equipements, 69960 Corbas (FR)
(72) Inventeur: Ducret, Franck, 01100 BELLIGNAT (FR); Pingon, Denis, 01110 ARANC (FR)
(74) Mandataire: Cabinet Plasseraud

(56) Documents cités:
- EP-A1- 2 383 094
- DE-A1- 19 911 491
- DE-A1-102006 018 402

## Description

L'invention se rapporte à un moule, à un connecteur spécialement adapté pour être utilisé dans un tel moule, ainsi qu'à une installation et à un procédé de moulage mettant en oeuvre un tel moule.

En particulier, l'invention se rapporte à un moule pour réaliser une pièce en matière plastique, du type comprenant des première et deuxième parties de moule présentant chacune une surface de moulage et une surface extérieure, lesdites première et deuxième parties de moule comportant respectivement des parties d'empreinte ménagées sur leurs surfaces de moulage, lesdites première et deuxième parties de moule étant déplaçables l'une par rapport à l'autre entre une position d'ouverture dans laquelle les surfaces de moulage sont à distance l'une de l'autre, et une position de fermeture dans laquelle les surfaces de moulage sont en contact l'une avec l'autre et dans laquelle les parties d'empreinte définissent une empreinte conformée selon la pièce à réaliser et adaptée pour recevoir la matière plastique, au moins la première partie de moule comportant au moins un canal débouchant dans la partie d'empreinte.

Des moules de ce type sont notamment utilisés pour la réalisation de pièces en matière plastique thermoplastique adaptée pour passer d'un état fluide à un état solide par un refroidissement. Pour une matière plastique thermoplastique, une telle transformation est réversible de sorte qu'il est possible de repasser de l'état solide à l'état fluide par un chauffage.

Dans une telle application, une matière plastique thermoplastique chaude, par exemple entre 240°C et 380°C, est injectée dans le moule froid, par exemple entre 20°C et 200°C. Le transfert de la matière plastique dans l'empreinte du moule se fait par un circuit directement aménagé dans le moule. Pour limiter l'apparition d'une « carotte » de matière plastique refroidie risquant d'empêcher l'utilisation du circuit pour un nouveau cycle d'injection, le circuit du moule est équipé d'un système bloc chaud. Ce système bloc chaud est intégré de façon permanente dans le moule pour pourvoir obtenir une zone du circuit chaude qui maintient la matière plastique thermoplastique dans l'état fluide. Cette matière plastique thermoplastique reste dans le moule mais peut être réinjectée dans l'empreinte dans le cycle d'injection suivant.

Dans la production de pièces composites mettant en oeuvre certains procédés de moulage comme l'infusion et le RTM (Resin Transfer Molding), d'autres moules du type précité sont utilisés avec de la matière plastique thermodurcissable. La matière plastique thermodurcissable comprend généralement deux composants dont le mélange conduit par une réaction de polymérisation au passage d'un état fluide à un état solide. La réaction de polymérisation peut être favorisée par certains facteurs parmi lesquels une élévation de la température. Toutefois, contrairement à la matière plastique thermoplastique, la transformation de l'état fluide à l'état solide de la matière plastique thermodurcissable est irréversible de sorte qu'il n'est pas possible de repasser de l'état solide à l'état fluide, y compris par un refroidissement.

Dans une telle application, la matière plastique thermodurcissable est injectée par l'intermédiaire d'une pompe d'alimentation et d'une tête d'injection fixée directement au moule ou à un système de distribution, appelé araignée, comprenant un ou plusieurs tubes de cuivre ou tuyaux plastiques souples. La matière plastique thermodurcissable est préchauffée dans la pompe d'alimentation puis injectée à une température intermédiaire pour la maintenir dans l'état fluide sans accélérer la réaction de polymérisation. Le moule est quant à lui chauffé pour atteindre une température de polymérisation de la matière plastique thermodurcissable. La matière plastique thermodurcissable injectée va donc cuire et durcir dans le moule.

Pour les pièces aéronautiques, en particulier, les matières plastiques thermoplastiques mises en oeuvre sont assez spéciales. Elles ont des caractéristiques de mise en oeuvre à température élevées, par exemple entre 80 à 120°C. Elles sont parfois sous forme de résines dites mono-composantes (type RTM 6 Hexcel, par exemple) dans lesquelles les deux composants précités se trouvent dans une même phase. De plus, une fois la matière plastique thermodurcissable injectée, la température de polymérisation peut atteindre de 160°C à 210°C.

Or la chaleur du moule va aussi se transmettre aux tubes ou tuyaux de l'araignée dont les extrémités vont aussi durcir. Les tubes ou tuyaux constituent alors des éléments consommables, qu'il faut préparer et changer à chaque injection compte tenu de l'irréversibilité de la transformation de la matière plastique thermodurcissable. Outre le coût et les problèmes vis-à-vis de l'environnement liés au replacement des tubes ou tuyaux de l'araignée, la connexion de l'araignée au moule, réalisée manuellement, réduit la productivité du système. Par ailleurs, même dans les configurations où la tête d'injection est directement fixée au moule, il est nécessaire de prévoir une étape manuelle pour visser la tête d'injection sur le moule.

Dans le cas d'un procédé de moulage par VARTM (vacuum assisted RTM), à l'opposé de la tête d'injection se trouve une tête d'éventation reliée à une pompe à vide afin d'aider la matière plastique à remplir l'empreinte, et d'expulser le surplus de matière plastique. Là aussi, un tuyau souple relie généralement le moule à la tête d'éventation. Ce tuyau doit aussi être changé à chaque cycle d'injection conduisant aux mêmes problèmes que ceux évoqués précédemment en lien avec l'araignée pour l'injection.

Compte tenu de la nécessité d'augmenter les cadences de fabrication de pièces en matière plastique thermodurcissable, il existe un besoin très important d'une automatisation des entrée et sortie de moule avec la volonté de réduire au plus économiques les opérations de connexion et les consommables.

Un système équivalent au système bloc chaud et adapté aux matières plastiques thermodurcissables a été développé sous l'appellation système bloc froid. Ce système bloc froid reste à une température intermédiaire pour acheminer la matière plastique thermodurcissable dans l'empreinte où elle sera chauffée pour la faire cuire.

Toutefois, que ce soit pour les matières plastiques thermoplastiques ou thermodurcissables, les systèmes blocs chauds ou blocs froids sont fixés à demeure sur les moules pour lesquels ils ont été conçus. Il en résulte la nécessité d'utiliser des moules différents en fonction de la matière plastique mise en oeuvre. Les moules présentent en outre une structure complexe. De plus, en cas de problème thermique, la matière plastique peut durcir dans le système bloc chaud ou dans le système bloc froid, nécessitant sinon un remplacement de ce système voire du moule, un nettoyage mécanique par un démontage complet du moule et du système.

Il est également connu, notamment des documents DE 10 2006 018 402 et DE 199 11 91, d'utiliser un moule auquel un tube ou un tuyau relié au dispositif d'injection peut être connecté par l'intermédiaire d'un connecteur conformément au préambule de la revendication 1. Le moule connu de ce type reste complexe à nettoyer et comprend un nombre important de consommables. En outre, il n'offre pas une modularité satisfaisante.

L'invention vise à pallier les problèmes évoqués ci-dessus.

A cet effet, selon un premier aspect, l'invention propose un moule du type précité dans lequel au moins la première partie de moule comporte en outre au moins un logement ménagé sur la surface extérieure de ladite première partie de moule, ledit logement présentant une surface intérieure dans laquelle débouche le canal,
dans lequel le moule comprend en outre au moins un connecteur présentant une surface extérieure et s'étendant entre une première partie de connecteur et une deuxième partie de connecteur, ledit connecteur comportant intérieurement au moins un conduit s'étendant entre un premier orifice débouchant sur la surface extérieure de la première partie de connecteur, et un deuxième orifice débouchant sur la surface extérieure de la deuxième partie de connecteur, ledit connecteur étant adapté pour réaliser des échanges thermiques entre le conduit et la surface extérieure dudit connecteur, ledit connecteur étant en outre adapté pour être fixé de manière amovible au moule de telle manière que la deuxième partie de connecteur soit disposée dans le logement avec la surface extérieure de ladite deuxième partie de connecteur en contact avec la surface intérieure dudit logement et le deuxième orifice en communication avec le canal, et que la première partie de connecteur soit disposée en dehors du logement,
dans lequel le conduit du connecteur comprend une pluralité de conduits élémentaires, chacun desdits conduits élémentaires s'étendant selon un axe entre des première et deuxième extrémités opposées débouchant sur la surface extérieure du connecteur, chacun desdits conduits élémentaires étant délimité par une surface latérale autour dudit axe, la première extrémité présentant une section supérieure à celle de la deuxième extrémité et la surface latérale convergeant depuis la première extrémité vers la deuxième extrémité, chacun desdits conduits élémentaires étant sécant à l'un des autres conduits élémentaires.

Le moule ainsi équipé d'un connecteur amovible permettant de gérer passivement les contraintes thermiques aux interfaces d'entrée et de sortie du moule présente une structure simplifiée et une polyvalence lui permettant de s'adapter à l'injection de différents types de matières plastiques, incluant notamment les matières plastiques thermoplastiques et les matières plastiques thermodurcissables. Le nettoyage du moule, et plus généralement de l'installation de moulage dans laquelle il est disposé, qui ne nécessite le démontage que du ou des connecteurs réutilisables, est simplifié. Le connecteur, qui peut être connecté de manière directe au moule et au dispositif d'injection sans nécessiter d'élément intermédiaire tel qu'un tube ou un tuyau, permet également de supprimer les consommables, réduisant les temps de production.

Selon des dispositions particulières, le connecteur permet également de réaliser une connexion/déconnexion automatique entre le dispositif d'injection, et le cas échéant, le dispositif d'éventation, et le moule, réduisant encore les temps de production.

Les dispositions concernant le conduit permettent de simplifier le nettoyage du connecteur en facilitant l'extraction de la matière plastique, notamment passée à l'état solide.

Elles permettent également de réaliser un conduit présentant des tronçons s'étendant dans des directions différentes tout en préservant la simplicité du nettoyage du connecteur en offrant un accès à chacun des tronçons. Le connecteur peut ainsi être connecté à l'une des parties de moule selon toute autre orientation appropriée, et notamment parallèlement au plan de joint entre les première et deuxième parties de moule, les conduits élémentaires étant agencés en conséquence. La modularité du connecteur et du moule, dont le logement et le canal peuvent présenter tout agencement souhaité, s'en trouve améliorée.

La première partie de connecteur peut présenter un axe, une longueur mesurée selon ledit axe et une dimension transversale mesurée perpendiculairement audit axe, la première partie de connecteur comportant au moins une portion, de préférence une portion essentielle (c'est-à-dire une portion s'étendant sur au moins la moitié de la longueur de la première partie de connecteur), présentant un rapport de la longueur sur la dimension transversale supérieur à 1, de préférence supérieur à 1,5. Un échange thermique entre l'extérieur du moule et le conduit dans la première partie de connecteur peut ainsi être favorisé de manière à maintenir la matière plastique dans un état souhaité.

Le connecteur peut s'étendre selon un axe central entre deux extrémités opposées au voisinage desquels les premier et deuxième orifices sont ménagés, les première et deuxième parties de connecteur s'étendant coaxialement selon l'axe central.

Dans un mode de réalisation, le moule peut être spécialement adapté pour réaliser une pièce en matière plastique thermodurcissable, ladite matière plastique thermodurcissable étant adaptée pour passer de manière irréversible d'un état fluide à un état solide par une réaction de polymérisation, ledit moule comprenant un dispositif de chauffage adapté pour chauffer au moins l'une des première et deuxième parties de moule.

De façon complémentaire ou alternative, le moule peut être spécialement adapté pour réaliser une pièce en matière plastique thermoplastique, ladite matière plastique thermoplastique étant adaptée pour passer de manière réversible d'un état fluide à un état solide par un refroidissement, ledit moule comprenant un dispositif de refroidissement adapté pour refroidir au moins l'une des première et deuxième parties de moule.

Selon un deuxième aspect, l'invention propose un connecteur spécialement adapté pour être utilisé dans un moule tel que défini précédemment, ledit connecteur présentant une surface extérieure et s'étendant entre une première partie de connecteur et une deuxième partie de connecteur, ledit connecteur comportant intérieurement au moins un conduit s'étendant entre un premier orifice débouchant sur la surface extérieure de la première partie de connecteur, et un deuxième orifice débouchant sur la surface extérieure de la deuxième partie de connecteur, ledit connecteur étant adapté pour réaliser des échanges thermiques entre le conduit et la surface extérieure dudit connecteur, ledit connecteur étant en outre adapté pour être fixé de manière amovible au moule de telle manière que la deuxième partie de connecteur soit disposée dans un logement dudit moule avec la surface extérieure de ladite deuxième partie de connecteur en contact avec une surface intérieure dudit logement et le deuxième orifice en communication avec un canal débouchant dans ledit logement, et que la première partie de connecteur soit disposée en dehors du logement,
dans lequel le conduit du connecteur comprend une pluralité de conduits élémentaires, chacun desdits conduits élémentaires s'étendant selon un axe entre des première et deuxième extrémités opposées débouchant sur la surface extérieure du connecteur, chacun desdits conduits élémentaires étant délimité par une surface latérale autour dudit axe, la première extrémité présentant une section supérieure à celle de la deuxième extrémité et la surface latérale convergeant depuis la première extrémité vers la deuxième extrémité, chacun desdits conduits élémentaires étant sécant à l'un des autres conduits élémentaires.

Selon un troisième aspect, l'invention propose une installation de moulage comprenant :
- un bâti,
- un moule tel que défini précédemment monté sur le bâti, ledit moule comprenant un logement d'injection, un canal d'injection débouchant dans ledit logement d'injection et un connecteur d'injection fixé de manière amovible au moule de telle manière que la deuxième partie de connecteur dudit connecteur d'injection soit disposée dans le logement d'injection,
- un dispositif d'injection comprenant une tête d'injection et adapté pour injecter de la matière plastique par la tête d'injection, ladite tête d'injection étant montée sur le bâti déplaçable par rapport au moule entre une position d'injection, dans laquelle ladite tête d'injection est connectée au premier orifice du connecteur d'injection, et une position d'attente, dans laquelle ladite tête d'injection est écartée du premier orifice du connecteur d'injection.

L'installation de moulage peut comprendre en outre une unité de commande électronique adaptée pour déplacer automatiquement la tête d'injection entre ses positions d'injection et d'attente.

Le moule peut comprendre en outre un logement d'éventation, un canal d'éventation débouchant dans ledit logement d'éventation et un connecteur d'éventation fixé de manière amovible au moule de telle manière que la deuxième partie de connecteur dudit connecteur d'éventation soit disposée dans le logement d'éventation, ladite installation de moulage comprenant en outre un dispositif d'éventation comprenant une tête d'éventation et adapté pour créer une aspiration par la tête d'éventation, ladite tête d'éventation étant montée sur le bâti déplaçable par rapport au moule entre une position d'éventation, dans laquelle ladite tête d'éventation est connectée au premier orifice du connecteur d'éventation, et une position d'attente, dans laquelle ladite tête d'éventation est écartée du premier orifice du connecteur d'éventation.

Lorsque l'installation de moulage comprend une unité de commande électronique, celle-ci peut en outre être adaptée pour déplacer automatiquement la tête d'éventation entre ses positions d'éventation et d'attente.

Selon un quatrième aspect, l'invention propose un procédé de moulage mettant en oeuvre une installation de moulage telle que définie précédemment, prévoyant successivement les étapes suivantes :
A- monter le moule sur le bâti,
B- mettre les première et deuxième parties de moule dans la position de fermeture,
C- placer la tête d'injection en position d'injection,
D- injecter de la matière plastique dans l'empreinte par l'intermédiaire du connecteur d'injection,
E- déplacer la tête d'injection vers la position d'attente,
F- retirer le connecteur d'injection, nettoyer le connecteur d'injection, et fixer à nouveau le connecteur d'injection sur le moule.

Le procédé de moulage peut prévoir en outre, parallèlement à l'étape F, de répéter les étapes A à E avec un autre moule.

Lorsque le moule est spécialement adapté pour réaliser une pièce en matière plastique thermodurcissable, le procédé de moulage peut prévoir :
- au cours de l'étape D, d'injecter de la matière plastique thermodurcissable et de chauffer au moins l'une des première et deuxième parties de moule par l'intermédiaire du dispositif de chauffage,
- au cours de l'étape E, de déplacer la tête d'injection vers la position d'attente lorsque la matière plastique thermodurcissable est passée à l'état solide dans la deuxième partie de connecteur du connecteur d'injection, et que la matière plastique thermodurcissable est encore à l'état fluide dans la première partie de connecteur du connecteur d'injection.

Lorsque le moule comprend le logement d'éventation, le canal d'éventation et le connecteur d'éventation, et que l'installation de moulage comprend le dispositif d'éventation, le procédé de moulage peut prévoir en outre :
- au cours de l'étape C, de placer la tête d'éventation en position d'éventation,
- au cours de l'étape D, d'aspirer la matière plastique dans l'empreinte par l'intermédiaire du connecteur d'éventation,
- au cours de l'étape E, de déplacer la tête d'éventation vers la position d'attente,
- au cours de l'étape F, de retirer le connecteur d'éventation, de nettoyer le connecteur d'éventation, et de fixer à nouveau le connecteur d'éventation sur le moule.

En particulier, lorsque le moule est spécialement adapté pour réaliser une pièce en matière plastique thermodurcissable, le procédé de moulage peut prévoir, au cours de l'étape E, de déplacer la tête d'éventation vers la position d'attente lorsque la matière plastique thermodurcissable à l'état fluide atteint la tête d'éventation.

D'autres objets et avantages de l'invention apparaîtront à la lecture de la description qui suit d'un mode de réalisation particulier de l'invention donné à titre d'exemple non limitatif, la description étant faite en référence aux dessins annexés dans lesquels :
- la figure 1 est une représentation en perspective selon une première orientation d'une installation de moulage comprenant un moule et un dispositif d'injection de matière plastique,
- la figure 2 est une représentation en perspective selon une deuxième orientation opposée à la première orientation de l'installation de moulage de la figure 1, illustrant un dispositif d'éventation,

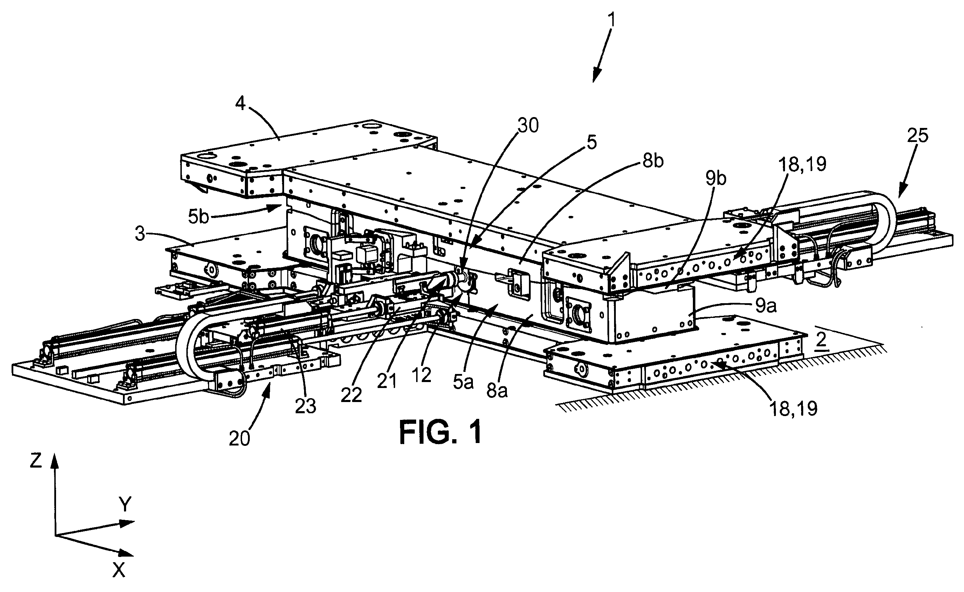

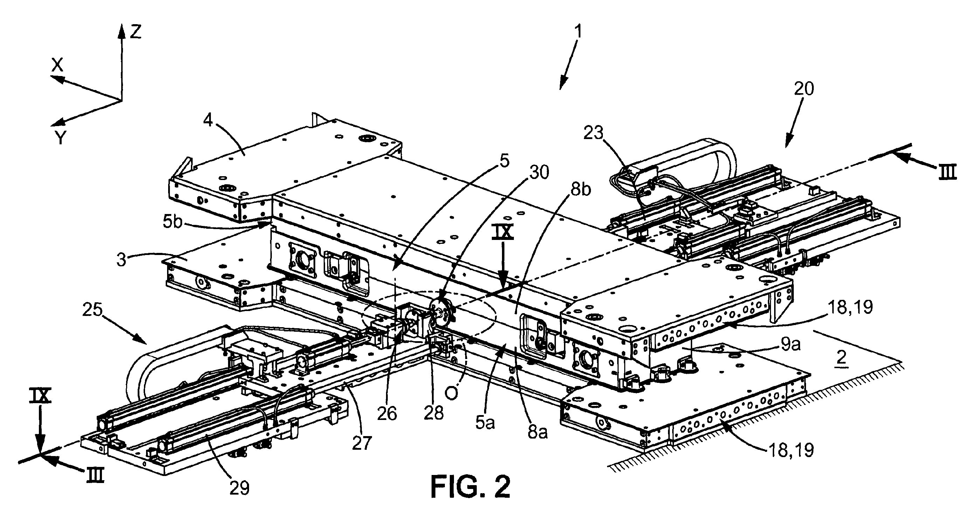

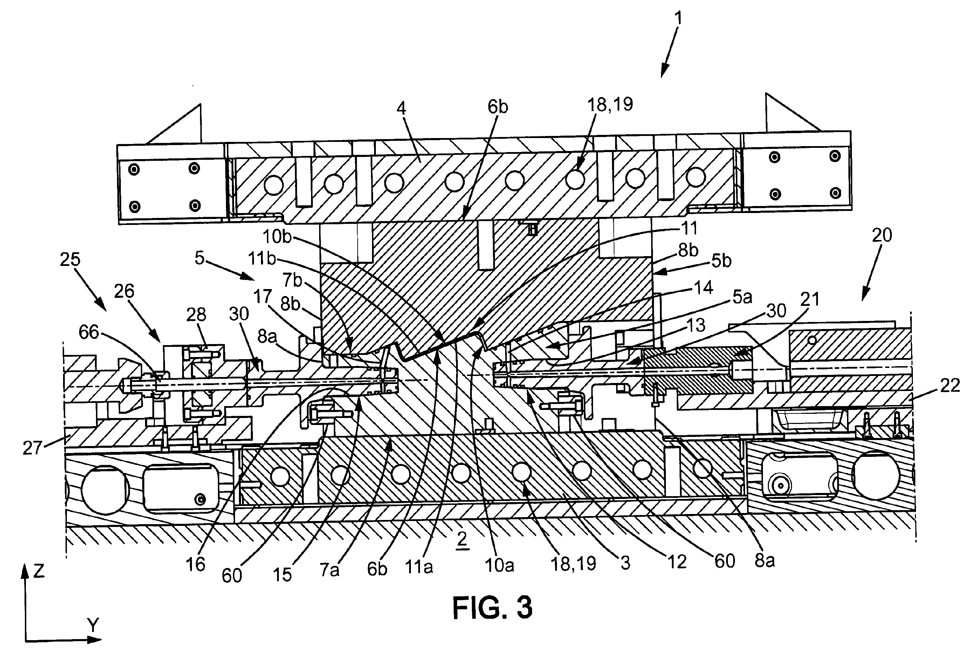

- la figure 3 est une représentation partielle en coupe selon la ligne référencée III-III sur la figure 2 de l'installation de moulage de la figure 1, illustrant une tête d'injection du dispositif d'injection en position d'injection permettant d'injecter de la matière plastique dans une empreinte du moule, et une tête d'éventation du dispositif d'éventation étant en position d'éventation permettant de créer une dépression dans l'empreinte du moule, la figure 3 illustrant en outre des connecteurs d'injection et d'éventation présentant des premières parties de connecteur adaptées pour être connectées respectivement aux têtes d'injection et d'éventation, et des deuxièmes parties de connecteur emmanchées respectivement dans des logements d'injection et d'éventation d'une partie de moule,
- la figure 4 est une représentation analogue à celle de la figure 3, illustrant les têtes d'injection et d'éventation dans des positions d'attente dans lesquelles elles sont écartées des premières parties de connecteur des connecteurs d'injection et d'éventation,

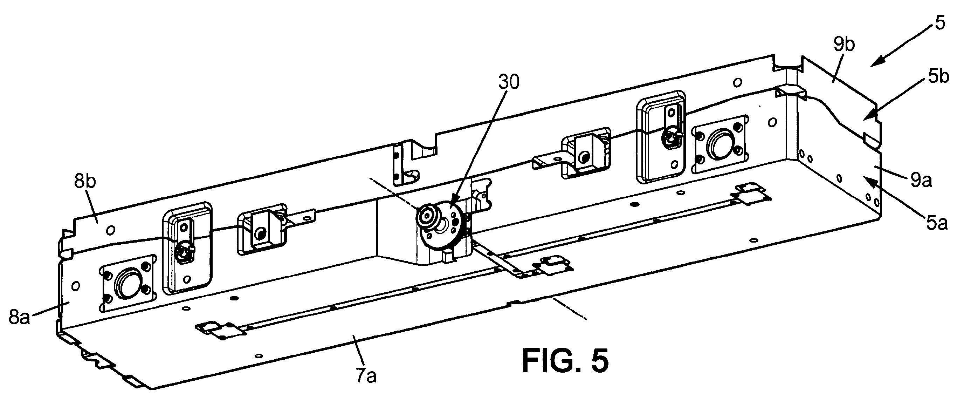

- la figure 5 est une représentation en perspective du moule de l'installation de moulage de la figure 1, illustrant le connecteur d'injection fixé de manière amovible à la partie du moule,
- la figure 6 est une représentation en perspective selon une première orientation du connecteur d'injection de la figure 3, illustrant au premier plan la deuxième partie de connecteur,
- la figure 7 est une représentation en perspective selon une deuxième orientation opposée à la première orientation du connecteur d'injection de la figure 3, illustrant au premier plan la première partie de connecteur,
- la figure 8 est une représentation en coupe longitudinale du connecteur d'injection de la figure 6,
- la figure 9 est une représentation partielle en coupe selon la ligne référencée IX-IX du détail référencé O sur la figure 2 de l'installation de moulage de la figure 1, illustrant un support de la tête d'éventation.

Sur les figures, les mêmes références désignent des éléments identiques ou analogues.

Les figures 1 à 4 représentent une installation de moulage 1 pour réaliser une pièce en matière plastique. L'installation de moulage 1 s'applique au moulage de tout type de matière plastique, incluant les matières plastiques thermoplastiques, thermodurcissables, élastomères ou autre.

En particulier, l'installation de moulage 1 représentée est spécialement adaptée pour réaliser une pièce en matière plastique thermodurcissable, éventuellement renforcée par une matrice de renfort constituée, par exemple, de fibres de carbone. La matière plastique thermodurcissable comprend généralement deux composants dont le mélange conduit par une réaction de polymérisation au passage d'un état fluide à un état solide. La réaction de polymérisation peut être favorisée par certains facteurs comme une élévation de température ou un catalyseur. Toutefois, la transformation de l'état fluide à l'état solide de la matière plastique thermodurcissable est irréversible de sorte qu'il n'est pas possible de repasser de l'état solide à l'état fluide, y compris par un refroidissement. L'installation de moulage 1 permet une mise en oeuvre de tout type de procédé de moulage de matière plastique thermodurcissable incluant notamment l'infusion, l'injection basse pression dite RTM (Resin Transfer Molding) ou la VARTM (Vacuum Assisted Resin Transfer Molding).

L'installation de moulage 1 permet également de réaliser une pièce en matière plastique thermoplastique. La matière plastique thermoplastique est adaptée pour passer d'un état fluide à un état solide par un refroidissement et pour repasser de l'état solide à l'état fluide par un chauffage. L'installation de moulage 1 permet une mise en oeuvre de tout type de procédé de moulage de matière plastique thermoplastique incluant notamment l'injection.

L'installation de moulage permet la réalisation d'une pièce par injection d'une seule matière plastique ou par injection composée de plusieurs matières plastiques, éventuellement de types différents, le cas échéant injectées successivement en combinant plusieurs procédés de moulage.

Sans y être limitée, dans le mode de réalisation représenté, l'installation de moulage 1 se présente sous la forme d'une presse comprenant un bâti 2 et deux plateaux 3, 4 sensiblement horizontaux, en regard et écartés l'un de l'autre selon une direction verticale Z. L'un des plateaux 3, fixe, par exemple constitué par le plateau inférieur sur la figure 1, est solidarisé au bâti 2. L'autre plateau 4, mobile, par exemple constitué par le plateau supérieur sur la figure 1, est monté sur le bâti 2 de manière pouvoir être déplacé, par tout système d'actionnement approprié, selon la direction verticale Z par rapport au plateau fixe 3.

L'installation de moulage 1 comprend également un moule 5 réalisé en tout matériau approprié pour permettre un moulage d'une matière plastique, et notamment en un matériau métallique, tel que de l'acier ou de l'aluminium, ou autre.

Le moule 5 comprend une première partie de moule 5a de forme globalement parallélépipédique présentant des faces supérieure 6a et inférieure 7a opposées et parallèles entre elles, ainsi que deux faces latérales 8a opposées et parallèles entre elles s'étendant entre les faces supérieure 6a et inférieure 7a, et deux faces transversales 9a opposées et parallèles entre elles s'étendant entre les faces supérieure 6a et inférieure 7a perpendiculairement aux faces latérales 8a. La première partie de moule 5a porte, sur sa face supérieure 6a, une surface de moulage 10a sur laquelle une partie d'empreinte 11a, composée de reliefs en creux et en saillie, est ménagée. La première partie de moule 5a présente également une surface extérieure s'étendant sur les faces latérales 8a, transversales 9a et inférieure 7a.

La première partie de moule 5a comporte un logement 12, dit d'injection, ménagé sur la surface extérieure de l'une des faces latérales 8a. Le logement d'injection 12 présente une surface intérieure 13 dans laquelle débouche un canal 14, dit d'injection, s'étendant jusqu'à la partie d'empreinte 11a. Sur la face extérieure de l'autre face latérale 8a, la première partie de moule comprend un autre logement 15, dit d'éventation, s'étendant coaxialement au logement d'injection 12. Le logement d'éventation 15 présente une surface intérieure 16 dans laquelle débouche un autre canal 17, dit d'éventation, s'étendant jusqu'à la partie d'empreinte 11a.

Le moule 5 comprend également une deuxième partie de moule 5b de forme globalement parallélépipédique présentant des faces supérieure 6b et inférieure 7b opposées et parallèles entre elles, ainsi que deux faces latérales 8b opposées et parallèles entre elles s'étendant entre les faces supérieure 6b et inférieure 7b, et deux faces transversales 9b opposées et parallèles entre elles s'étendant entre les faces supérieure 6b et inférieure 7b perpendiculairement aux faces latérales 8b. La deuxième partie de moule 5b porte, sur sa face inférieure 7b, une surface de moulage 10b sur laquelle une partie d'empreinte 11b, composée de reliefs en creux et en saillie, est ménagée. La deuxième partie de moule 5b présente également une surface extérieure s'étendant sur les faces latérales 8b, transversales 9b et supérieure 6b.

Dans le mode de réalisation représenté, la première partie de moule 5a est fixée au plateau fixe 3 et la deuxième partie de moule 5b est fixée au plateau mobile 4, de telle manière que les faces transversales 9a, 9b soient écartées l'une de l'autre selon une direction longitudinale X, horizontale, perpendiculaire à la direction verticale Z, et les faces latérales 8a, 8b soient écartées l'une de l'autre selon une direction transversale Y, horizontale, perpendiculaire aux directions longitudinale X et verticale Z. Les logements d'injection 12 et d'éventation 15 s'étendent alors selon la direction transversale Y.

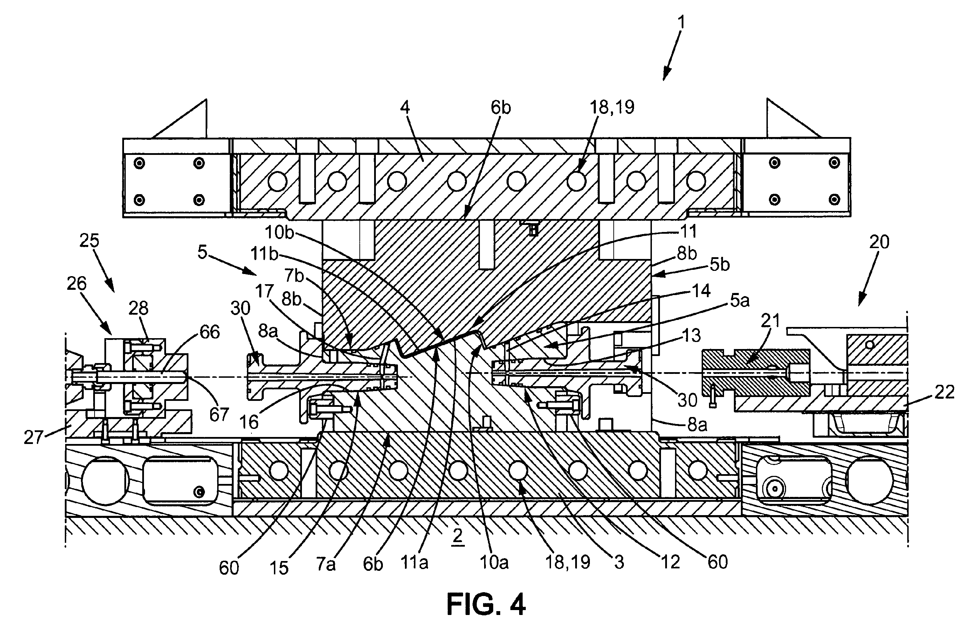

La deuxième partie de moule 5b est alors déplaçable par rapport à la première partie de moule 5a entre une position d'ouverture, non représentée, dans laquelle les surfaces de moulage 10a, 10b sont à distance l'une de l'autre, et une position de fermeture, représentée notamment sur les figures 3 et 4, dans laquelle les surfaces de moulage 10a, 10b sont en contact l'une avec l'autre et dans laquelle les parties d'empreinte 11a, 11b définissent une empreinte 11 conformée selon la pièce à réaliser et adaptée pour recevoir la matière plastique.

En variante, tout autre agencement des première 5a et deuxième 5b parties de moule sur les plateaux fixe 3 et mobile 4 leur permettant d'être déplacées entre leurs positions d'ouverture et de fermeture pourrait être prévu. En outre, l'invention n'est pas limitée à un déplacement en translation de la deuxième partie de moule 5b par rapport à la première partie de moule 5a de sorte que tout autre déplacement relatif des première 5a et deuxième 5b parties de moule pourrait être prévu. De même, l'agencement d'un ou plusieurs logements d'injection 12 et/ou d'éventation 15 et des canaux d'injection 14 et/ou d'éventation 17 correspondants n'est pas limité à celui décrit précédemment. Ainsi un ou plusieurs logements d'injection 12 et un ou plusieurs canaux d'injection 14 correspondants, et un ou plusieurs logements d'éventation 15 et un ou plusieurs canaux d'éventation 17 correspondants pourraient être prévus sur l'une et/ou l'autre des première 5a et deuxième 5b parties de moule. Un ou plusieurs logements d'injection 12 et/ou d'éventation 15 pourraient également être prévus à l'interface entre les première 5a et deuxième 5b parties de moule.

Pour favoriser la réaction de polymérisation de la matière plastique thermodurcissable, le moule 5 comprend un dispositif de chauffage 18 adapté pour chauffer au moins l'une des première 5a et deuxième 5b parties de moule. Pour permettre le passage de la matière plastique thermoplastique de l'état fluide à l'état solide, le moule 5 comprend également un dispositif de refroidissement 19 adapté pour refroidir au moins l'une des première 5a et deuxième 5b parties de moule. Dans le mode de réalisation représenté, sans toutefois y être limités, les dispositifs de chauffage 18 et de refroidissement 19 comprennent des conduites s'étendant dans les plateaux fixe 3 et mobile 4 et dans lesquelles un fluide peut circuler à la température souhaitée. En variante, les conduites pourraient s'étendre dans l'une et/ou l'autre des première 5a et deuxième 5b parties de moule. Tout autre dispositif de chauffage 18 et tout autre dispositif de refroidissement 19 pourraient toutefois être prévus.

L'installation de moulage 1 comprend un dispositif d'injection 20 adapté pour injecter de la matière plastique. En particulier, le dispositif d'injection 20 comprend une tête d'injection 21, un réservoir d'alimentation de matière plastique et un organe d'alimentation, tel qu'une pompe ou autre, reliant le réservoir d'alimentation à la tête d'injection 21 par l'intermédiaire d'une tubulure. La tête d'injection 21 est montée sur un chariot d'injection 22 en regard du logement d'injection 12. Le chariot d'injection 22 est monté sur le bâti 2 déplaçable par rapport au moule 5 selon la direction transversale Y, par l'intermédiaire de vérins pneumatiques 23 ou tout autre système d'entraînement approprié. La tête d'injection 21 est ainsi déplaçable selon la direction transversale Y entre une position d'injection, représentée sur la figure 3, dans laquelle elle est approchée du moule 5 de manière à permettre l'injection de matière plastique dans l'empreinte 11 comme il apparaîtra de la suite de la description, et une position d'attente, représentée sur la figure 4, dans laquelle elle est écartée du moule 5.

L'installation de moulage 1 comprend également un dispositif d'éventation 25 adapté pour créer une aspiration par la tête d'éventation 26. En particulier, le dispositif d'éventation 26 comprend une tête d'éventation 26, un réservoir de collecte et un organe d'aspiration, tel qu'une pompe à vide, reliant le réservoir de collecte à la tête d'éventation 26. La tête d'éventation 26 comprend un support 28 en regard du logement d'éventation 15. Le support 28 est lui même monté sur un chariot d'éventation 27 monté sur le bâti 2 déplaçable par rapport au moule 5 selon la direction transversale Y, par l'intermédiaire de vérins pneumatiques 29 ou tout autre système d'entraînement approprié. La tête d'éventation 26 est ainsi déplaçable entre une position d'éventation, représentée sur la figure 3, dans laquelle elle est approchée du moule 5 de manière à permettre la création d'une dépression dans l'empreinte 11 comme il apparaîtra de la suite de la description, et une position d'attente, représentée sur la figure 4, dans laquelle elle est écartée du moule 5.

Le dispositif d'injection 20 et le dispositif d'éventation 25, de même que le système d'actionnement des plateaux fixe 3 et mobile 4 sont connectés à une unité de commande électronique adaptée pour commander des déplacements automatiques du plateau mobile 4 et des chariots d'injection 22 et d'éventation 27, ainsi que le fonctionnement des organes d'alimentation et d'aspiration des dispositifs d'injection 20 et d'éventation 25.

Comme il apparaît sur les figures 3 et 4, les interfaces entre le dispositif d'injection 20 et le moule 5, d'une part, et entre le dispositif d'éventation 25 et le moule 5, d'autre part, sont assurées respectivement par deux connecteur 30, l'un d'injection et l'autre d'éventation.

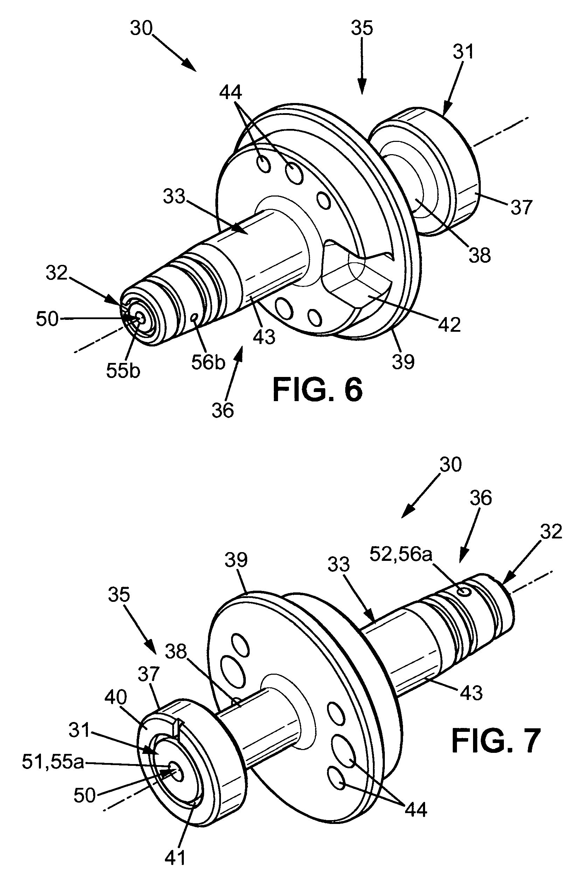

Les connecteurs d'injection et d'éventation 30, dont l'un est représenté en détails sur les figures 6 à 8, sont identiques.

Chaque connecteur 30 présente un axe central A et des premières 31 et deuxième 32 extrémités opposées. Le connecteur 30 est réalisé de manière à présenter rigidité d'ensemble lui permettant de conserver une géométrie constante au cours de son utilisation.

En particulier, le connecteur 30 s'étend entre des première 35 et deuxième 36 parties de connecteur attenantes selon l'axe central A et portant respectivement les première 31 et deuxième 32 extrémités du connecteur. Dans le mode de réalisation représenté, le connecteur 30 est droit et présente une surface extérieure 33 sensiblement de révolution autour de son axe central A, les première 35 et deuxième 36 parties de connecteur s'étendant coaxialement selon l'axe central A. En variante, le connecteur 30 pourrait être coudé, les première 35 et deuxième 36 parties de connecteur formant un angle compris entre 90° et 180°.

La première partie de connecteur 35 s'étend sensiblement sur une première moitié d'une longueur L mesurée selon l'axe central A du connecteur 30. Elle comprend une douille 37 et un flasque 39, cylindriques selon l'axe central A, reliés l'un à l'autre par un manchon 38, cylindrique selon l'axe central A. Le manchon 38 présente une dimension transversale D1 mesurée perpendiculairement à l'axe central A, ici un diamètre, inférieure à celle de la douille 37 et du flasque 39.

La douille 37 présente, sur une face opposée au flasque 39, une surface de connexion 40 perpendiculaire à l'axe central A du connecteur 30 et formant la première extrémité 31 du connecteur 30. La surface de connexion 40 est adaptée pour être mise en contact étanche avec la tête d'injection 21, pour le connecteur d'injection, et avec la tête d'éventation 26, pour le connecteur d'injection. En particulier, la surface de connexion 40 est plane et comprend un organe de connexion se présentant, dans le mode de réalisation représenté, sous la forme d'une gorge annulaire 41 adaptée pour recevoir un joint d'étanchéité. En variante, la surface de connexion 40 pourrait présenter toute autre forme lui permettant de réaliser une connexion étanche et directe, c'est-à-dire sans élément intermédiaire, entre les dispositifs d'injection 20 et/ou d'éventation 25 et le moule 5.

Le flasque 39 présente des trous 44 d'axes parallèle à l'axe central A du connecteur 30. Une échancrure 42 est ménagée sur une face du flasque 39 opposée à la douille 37.

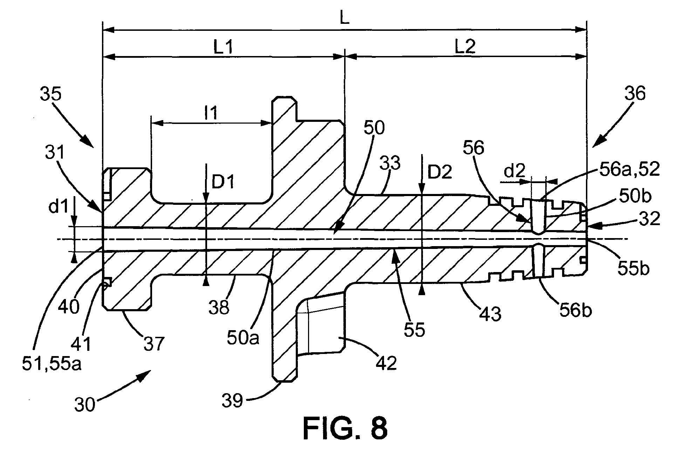

La deuxième partie de connecteur 36 s'étend sensiblement sur une deuxième moitié de la longueur L du connecteur 30 et comprend un manchon 43 cylindrique selon l'axe central A s'étendant depuis le flasque 39. L'extrémité de ce manchon 43 opposée au flasque 39 forme la deuxième extrémité 32 du connecteur 30. Au voisinage de cette deuxième extrémité 32, le manchon 43 de la deuxième partie de connecteur 36 peut converger vers l'axe central A pour simplifier le montage du connecteur 30 sur le moule 5. Le manchon 43 de la deuxième partie de connecteur 36 présente une dimension transversale D2 inférieure à celle du flasque 39 et, comme représenté sur la figure 8, supérieure à la dimension transversale du manchon 38 de la première partie de connecteur 35.

Le connecteur 30 comporte intérieurement un conduit 50, par exemple de section circulaire, s'étendant entre un premier orifice 51 débouchant sur la surface extérieure de la première partie de connecteur 35, au voisinage de la première extrémité 31, et un deuxième orifice 52 débouchant sur la surface extérieure de la deuxième partie de connecteur 36, au voisinage de la deuxième extrémité 32.

En particulier, comme représenté sur la figure 8, le conduit 50 comprend un premier conduit élémentaire 55 s'étendant selon un axe, coaxial à l'axe central A du connecteur 30, entre une première extrémité 55a débouchant sur la surface de connexion 40 de la douille 37, et une deuxième extrémité 55b débouchant sur la deuxième extrémité 32 du connecteur 30. La première extrémité 55a du premier conduit élémentaire 55 présente une section supérieure à celle de sa deuxième extrémité 55b. Le premier conduit élémentaire 55 est, par ailleurs, délimité par une surface latérale cylindrique autour de son axe, laquelle surface latérale converge depuis la première extrémité 55a vers la deuxième extrémité 55b. Le premier conduit élémentaire 55 présente ainsi une conicité entre ses première 55a et deuxième 55b extrémités.

Le conduit 50 comprend un deuxième conduit élémentaire 56 s'étendant au voisinage de la deuxième extrémité 32 du connecteur 30 en étant sécant au premier conduit élémentaire 55. En particulier, le deuxième conduit élémentaire 56 s'étend selon un axe perpendiculaire à l'axe central A du connecteur 30, entre des première 56a et deuxième 56b extrémités opposées débouchant de part et d'autre de l'axe central A sur la surface extérieure du manchon 43 de la deuxième partie de connecteur 36. La première extrémité 56a du deuxième conduit élémentaire 56 présente une section supérieure à celle de sa deuxième extrémité 56b. Comme le premier conduit élémentaire 55, le deuxième conduit élémentaire 56 est délimité par une surface latérale cylindrique autour de son axe, laquelle surface latérale converge depuis la première extrémité 56a vers la deuxième extrémité 56b. Le deuxième conduit élémentaire 56 présente ainsi une conicité entre ses première 55a et deuxième 56b extrémités.

Le conduit 50 est alors constitué par un premier tronçon 50a entre la première extrémité 55a du premier conduit élémentaire 55 et l'intersection du premier conduit élémentaire 55 avec le deuxième conduit élémentaire 56, et par un deuxième tronçon 50b entre l'intersection du premier conduit élémentaire 55 avec le deuxième conduit élémentaire 56 et la première extrémité 56a du deuxième conduit élémentaire 56. La première extrémité 55a du premier conduit élémentaire 55 forme alors le premier orifice 51 du conduit 50 du connecteur 30, agencé de manière centrale sur la surface de connexion 40 et entouré par l'organe de connexion. Quant au deuxième orifice 52 du conduit 50 du connecteur 30, il est formé par la première extrémité 56a du deuxième conduit élémentaire 56. En variante, la deuxième extrémité 56b du deuxième conduit élémentaire 56 pourrait former le deuxième orifice 52 du conduit 50 du connecteur 30.

L'invention n'est pas limitée à un conduit comprenant deux conduits élémentaires agencés à 90°. Dans d'autres modes de réalisation, le conduit 50 pourrait comprendre tout autre agencement de deux ou plus de deux conduits élémentaires traversants, sécants et définissant une succession de tronçons ouverts vers l'extérieur. Une telle succession de tronçons comprendrait, outre les premier 50a et deuxième 50b tronçons décrits précédemment, un ou plusieurs tronçons intermédiaires entre deux intersections de conduits élémentaires successifs. Le conduit 50 pourrait également présenter notamment une pluralité de premiers orifices 51 et/ou une pluralité de deuxièmes orifices 52.

Le connecteur 30 est adapté pour réaliser des échanges thermiques entre le conduit 50 et sa surface extérieure 33. En particulier, le connecteur 30 peut être réalisé en un matériau thermiquement conducteur, et notamment un matériau métallique tel que l'acier, l'aluminium ou autre, ou un matériau polymère, tel que le téflon.

De façon complémentaire ou alternative, le connecteur 30 peut être pourvu d'éléments de conduction thermique adaptés pour réaliser ou moduler la conduction thermique entre le conduit 50 et la surface extérieure 33 le long du connecteur 30.

En particulier, la première partie de connecteur 35 pourrait comprendre des d'éléments de conduction thermique adaptés pour favoriser une conduction thermique entre le conduit 50 et la surface extérieure 33. Par exemple, les éléments de conduction thermique peuvent être choisis parmi des inserts en matériau approprié s'étendant entre le conduit 50 et la surface extérieure 33 de la première partie de connecteur 35, un revêtement en matériau approprié de la surface extérieure 33 de la première partie de connecteur 35 ou un traitement de surface de la surface extérieure 33 de la première partie de connecteur 35. Le traitement de surface pourrait inclure notamment un usinage de la surface extérieure 33, et en particulier la formation de rainures périphériques pour augmenter la surface d'échange thermique de la première partie de connecteur 35 avec, comme il apparaîtra de la suite de la description, l'air ambiant à l'extérieur du moule 5.

Inversement, la deuxième partie de connecteur 36 peut comprendre des d'éléments de conduction thermique adaptés pour réduire une conduction thermique entre le conduit 50 et la surface extérieure 33. Par exemple, les éléments de conduction thermique peuvent être choisis parmi des inserts en matériau approprié s'étendant dans la deuxième partie de connecteur 36, un revêtement en matériau approprié de la surface extérieure 33 de la deuxième partie de connecteur 36 ou un traitement de surface de la surface extérieure 33 de la deuxième partie de connecteur 36. Sur les figures, le traitement de surface inclut un usinage de la surface extérieure 33 sous la forme de rainures périphériques pour diminuer la surface d'échange thermique de la deuxième partie de connecteur 36 avec, comme il apparaîtra de la suite de la description, le moule 5.

En outre, la première partie du connecteur 35 peut être conformée pour favoriser les échanges thermiques entre la surface extérieure 33 et le conduit 50. Par exemple, le manchon 38 de la première partie de connecteur 35 peut constituer une portion présentant un rapport de la longueur sur la dimension transversale supérieur à 1, de préférence supérieur à 1,5. Dans le mode de réalisation représenté, le manchon 38 constitue une portion essentielle (au moins égale à la moitié) de la première partie de connecteur 35.

A titre d'exemple non limitatif, le connecteur 30 représenté sur la figure 8 et utilisé avec une matière plastique thermodurcissable mono-composante type RTM 6 Hexcel peut présenter les dimensions suivantes :
- longueur L du connecteur 30 : 200 mm,
- longueur L1 de la première partie de connecteur 35 : 100 mm,
- longueur L2 de la deuxième partie de connecteur 36 : 100 mm,
- longueur 11 du manchon 38 de la première partie de connecteur 35 : 50 mm,
- diamètre D1 du manchon 38 de la première partie de connecteur 35 : 30 mm,
- diamètre D2 du manchon 43 de la deuxième partie de connecteur 36 : 37 mm,
- diamètre d1 du premier orifice 51 du conduit 50 : 10,2 mm,
- diamètre d2 du deuxième orifice 52 du conduit 50 : 7 mm.

Le connecteur 30 peut également être réalisé de manière à limiter l'adhésion de la matière plastique au conduit 50 pour, d'une part, favoriser la circulation de la matière plastique à l'état fluide dans le conduit 50 et, d'autre part, favoriser le glissement de la matière plastique à l'état solide sur la surface latérale du conduit 50. Ces dispositions peuvent notamment être mises en oeuvre par le choix d'un matériau particulier, tel que le téflon, pour la réalisation du connecteur 30. De façon complémentaire ou alternative, il est possible d'avoir recours à un revêtement approprié appliqué sur la surface latérale du conduit 50, par exemple par dépôt physique en phase vapeur (PVD), ou à un traitement de surface approprié de la surface latérale du conduit 50.

Comme représenté sur les figures 3 et 4, le connecteur d'injection 30 est monté sur la première partie de moule 5a. La deuxième partie de connecteur 36 est emmanchée dans le logement d'injection 12. En particulier, la surface extérieure 33 du manchon 43 de la deuxième partie de connecteur 36 est en contact avec la surface intérieure 13 du logement d'injection 12 de manière à permettre des échanges thermiques entre le moule 5 et la matière plastique circulant dans le conduit 50 au niveau de la deuxième partie de connecteur 36. Les deuxièmes extrémités 55b, 56b des conduits élémentaires 55, 56 sont obturées par des portions de surface intérieure 13 du logement d'injection 12 de manière à guider la matière plastique depuis le premier orifice 51 vers le deuxième orifice 52. Le flasque 39 du connecteur d'injection 30 vient en contact avec la surface extérieure de la première partie de moule 5a. Un élément saillant 60 fixé sur la surface extérieure de la première partie de moule 5a est reçu dans l'échancrure 42 du flasque 39 pour orienter le connecteur 30 par rapport au moule 5 de telle manière que le deuxième orifice 52 soit en regard du canal d'injection 14. En variante, le deuxième orifice 52 pourrait alimenter plusieurs canaux d'injection 14 ou plusieurs deuxièmes orifices 52 pourraient alimenter un ou plusieurs canaux d'injection 14.

La première partie de connecteur 35 s'étend en dehors du logement d'injection 12 de manière à permettre des échanges thermiques entre l'air ambiant et la matière plastique circulant dans le conduit 50 au niveau de la première partie de connecteur 35.

Le connecteur d'injection 30 peut être fixé au moule par vissage au travers des trous 44 du flasque 39. Le connecteur d'injection 30 peut ainsi être facilement démonté du moule 5 par un dévissage, en vue notamment d'un nettoyage. L'invention n'est toutefois pas limitée à la fixation du connecteur 30 sur le moule 5 par vissage d'un flasque formé sur le connecteur 30. En variante, tout autre système de fixation amovible, et notamment un système de fixation magnétique, entre le connecteur 30 et le moule 5 pourrait être prévu.

De la même manière, la deuxième partie de connecteur 36 du connecteur d'éventation 30 est emmanchée dans le logement d'éventation 15 avec la surface extérieure 33 du manchon 43 de la deuxième partie de connecteur 36 en contact avec la surface intérieure 16 du logement d'éventation 15. Les deuxièmes extrémités 55b, 56b des conduits élémentaires 55, 56 sont obturées par des portions de surface intérieure 16 du logement d'éventation 15 de manière à guider la matière plastique depuis le deuxième orifice 52 vers le premier orifice 51. Le flasque 39 du connecteur d'éventation 30 vient en contact avec la surface extérieure de la première partie de moule 5a et le deuxième orifice 52 est en regard du canal d'éventation 17, du fait de l'orientation définie par l'échancrure 42 et un élément saillant 60 sur la surface extérieure de la première partie de moule 5a. La première partie de connecteur 35 s'étend en dehors du logement d'éventation 15. Le connecteur d'éventation 30 peut être fixé au moule 5 par vissage ou tout autre système de fixation amovible approprié.

Un procédé de moulage mettant en oeuvre l'installation de moulage 1 est maintenant décrit.

Une première étape A consiste à monter les première 5a et deuxième 5b parties de moule sur les plateaux fixe 3 et mobile 4.

Ensuite, au cours d'une étape B, le plateau mobile 4 est déplacé pour mettre les première 5a et deuxième 5b parties de moule dans la position de fermeture et former l'empreinte 11 à l'interface entre les surfaces de moulage 10a, 10b des première 5a et deuxième 5b parties de moule. Au cours de cette étape B, préalablement à la fermeture du moule, pour la réalisation d'une pièce composite par exemple, des composants, tels qu'une matrice de renfort composée par exemple de fibres de carbone, peuvent être placés dans la partie d'empreinte 11a de la première partie de moule 5a.

Dans une étape C, le chariot d'injection 22 est avancé automatiquement vers le moule 5 pour mettre la tête d'injection 21 en position d'injection dans laquelle elle est connectée au premier orifice 51 du connecteur d'injection 30. Au cours de cette même étape C, le chariot d'éventation 27 est avancé automatiquement vers le moule 5 pour mettre la tête d'éventation 26 en position d'éventation dans laquelle elle est connectée au premier orifice 51 du connecteur d'éventation 30.

Dans une étape D, l'organe d'alimentation du dispositif d'injection 20 est activé de manière à injecter la matière plastique provenant du réservoir d'alimentation dans l'empreinte 11 successivement au travers de la tête d'injection 21, du conduit 50 du connecteur d'injection 30 et du canal d'injection 14.

Dans le cas d'une matière plastique thermodurcissable, au moins l'une des première 5a et deuxième 5b parties de moule peut être chauffée par le dispositif de chauffage 18 pour atteindre la température de polymérisation. Parallèlement à l'injection, l'organe d'aspiration du dispositif d'éventation 25 est activé pour créer une dépression dans l'empreinte et aspirer de la matière plastique successivement au travers du canal d'éventation 17, du connecteur d'éventation 30 et de la tête d'éventation 26.

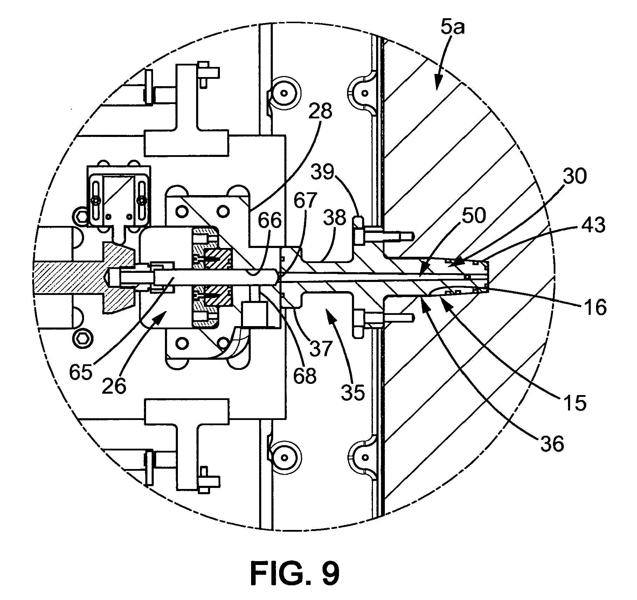

Comme représenté sur la figure 9, le support 28 de la tête d'éventation 26 peut être équipé d'un obturateur 65 déplaçable dans un conduit d'aspiration 66. L'obturateur 65 peut ainsi présenter une position d'obturation dans laquelle il obture une extrémité d'aspiration 67 destiné à venir en contact avec le premier orifice 51 du connecteur d'éventation 30. Il peut être déplacé vers une position escamotée dans laquelle il est écarté de l'extrémité d'aspiration 67 de manière à dégager une conduite de dérivation 68 s'étendant perpendiculairement au conduit d'aspiration 66 et en communication avec l'organe d'aspiration.

L'obturateur 65 peut être placé en position d'obturation avant la fin de l'injection de matière plastique dans l'empreinte 11 pour assurer une mise en pression de la matière plastique, et ainsi un bon remplissage de l'empreinte et, le cas échéant, une bonne imprégnation des fibres de carbone.

Une fois que la matière plastique a durci dans l'empreinte, au cours d'une étape E suivante, les chariots d'injection 22 et d'éventation 27 peuvent être reculés automatiquement par rapport au moule 5 pour placer les têtes d'injection 21 et d'éventation 26 dans leurs positions d'attente, à distance des premiers orifices 51 des connecteurs d'injection et d'éventation 30. Le cas échéant, le passage à la position d'attente est réalisé après obturation des têtes d'injection 21 et d'éventation 26.

En particulier, dans le cas d'une matière plastique thermodurcissable, du fait de la conduction thermique entre le moule 5 et le conduit 50 dans la deuxième partie de connecteur 36, la matière plastique peut passer à l'état solide dans cette deuxième partie de connecteur 36. Du fait de la conduction thermique entre l'air ambiant et le conduit 50 dans la première partie de connecteur 35, la matière plastique peut rester à l'état fluide dans cette première partie de connecteur 35. Lorsque cette situation est détectée par tout moyen approprié (capteur, temporisation, etc.), la tête d'injection 21 est écartée.

Dans la même manière, la tête d'éventation 26 peut être écartée vers la position d'attente lorsque la matière plastique thermodurcissable à l'état fluide atteint la tête d'éventation 26.

Le moule 5 peut être retiré de l'installation de moulage 1 et les étapes A à E décrite ci-dessus peuvent être répétées avec un autre moule 5.

Pendant qu'une nouvelle pièce est réalisée dans l'autre moule, les connecteurs d'injection et d'éventation 30 peuvent être retirés afin de les nettoyer. Compte tenu de la conicité des conduits élémentaires 55, 56 et de l'accès offert à chacun d'entre eux par l'extérieur, la matière plastique dans l'état solide peut aisément être retirée en la poussant depuis la deuxième extrémité 55b, 56b vers la première extrémité 55a, 56a, plus large. La matière plastique à l'état fluide est retirée par tout moyen approprié, par exemple en utilisant un solvant. Les connecteurs d'injection et d'éventation 30 peuvent ensuite être remontés sur le moule pour un nouveau cycle.

Le moule 5 peut à nouveau être monté sur le bâti 2 pour déplacer les première 5a et deuxième 5b parties de moule vers la position d'ouverture et éjecter la pièce ainsi formée.

Parallèlement au nettoyage des connecteurs d'injection et d'éventation 30, les têtes d'injection 21 et d'éventation 26 peuvent être nettoyées. En particulier, du fait de l'utilisation des connecteurs d'injection et d'éventation 30, la matière plastique se trouve à l'état fluide dans ces têtes d'injection 21 et d'éventation 26. La tête d'injection 26 peut être nettoyée avec un solvant. La tête d'éventation 26, dans la position d'attente, peut également être nettoyée avec un solvant, après que l'obturateur 65 a été placé dans la position escamotée et qu'une aspiration a été commandée pour vider le conduit d'aspiration 66 et la conduite de dérivation 68 de la matière plastique qui peut alors être collectée dans le réservoir de collecte du dispositif d'éventation 25.

## Revendications

1. Moule (5) pour réaliser une pièce en matière plastique, comprenant des première (5a) et deuxième (5b) parties de moule présentant chacune une surface de moulage (10a, 10b) et une surface extérieure, lesdites première (5a) et deuxième (5b) parties de moule comportant respectivement des parties d'empreinte (11a, 11b) ménagées sur leurs surfaces de moulage (10a, 10b), lesdites première (5a) et deuxième (5b) parties de moule étant déplaçables l'une par rapport à l'autre entre une position d'ouverture dans laquelle les surfaces de moulage (10a, 10b) sont à distance l'une de l'autre, et une position de fermeture dans laquelle les surfaces de moulage (10a, 10b) sont en contact l'une avec l'autre et dans laquelle les parties d'empreinte (11a, 11b) définissent une empreinte (11) conformée selon la pièce à réaliser et adaptée pour recevoir la matière plastique, au moins la première partie de moule (5a) comportant au moins un canal (14) débouchant dans la partie d'empreinte (11a),
dans lequel au moins la première partie de moule (5a) comporte en outre au moins un logement (12) ménagé sur la surface extérieure de ladite première partie de moule (5a), ledit logement (12) présentant une surface intérieure (13) dans laquelle débouche le canal (14),
et dans lequel le moule (5) comprend en outre au moins un connecteur (30) présentant une surface extérieure (33) et s'étendant entre une première partie de connecteur (35) et une deuxième partie de connecteur (36), ledit connecteur (30) comportant intérieurement au moins un conduit (50) s'étendant entre un premier orifice (51) débouchant sur la surface extérieure de la première partie de connecteur (35), et un deuxième orifice (52) débouchant sur la surface extérieure de la deuxième partie de connecteur (36), ledit connecteur (30) étant adapté pour réaliser des échanges thermiques entre le conduit (50) et la surface extérieure (33) dudit connecteur (30), ledit connecteur (30) étant en outre adapté pour être fixé de manière amovible au moule (5) de telle manière que la deuxième partie de connecteur (36) soit disposée dans le logement (12) avec la surface extérieure (33) de ladite deuxième partie de connecteur (36) en contact avec la surface intérieure (13) dudit logement (12) et le deuxième orifice (52) en communication avec le canal (14), et que la première partie de connecteur (35) soit disposée en dehors du logement (12),
dans lequel le conduit (50) du connecteur (30) comprend une pluralité de conduits élémentaires (55, 56), chacun desdits conduits élémentaires (55, 56) s'étendant selon un axe entre des première (55a, 56a) et deuxième (55b, 56b) extrémités opposées, chacun desdits conduits élémentaires (55, 56) étant délimité par une surface latérale autour dudit axe, la première extrémité (55a, 56a) présentant une section supérieure à celle de la deuxième extrémité (55b, 56b) et la surface latérale convergeant depuis la première extrémité (55a, 56a) vers la deuxième extrémité (55b, 56b), chacun desdits conduits élémentaires (55, 56) étant sécant à l'un des autres conduits élémentaires (55, 56)
ledit moule (5) étant **caractérisé en ce que** les première (55a, 56a) et deuxième (55b, 56b) extrémités de chacun desdits conduits élémentaires (55, 56) débouchent sur la surface extérieure (33) du connecteur (30).

2. Moule (5) selon la revendication 1, dans lequel la première partie de connecteur (35) présente un axe (A), une longueur (L) mesurée selon ledit axe (A) et une dimension transversale (D1) mesurée perpendiculairement audit axe (A), la première partie de connecteur (35) comportant au moins une portion (37), de préférence une portion essentielle, présentant un rapport de la longueur (L) sur la dimension transversale (D1) supérieur à 1, de préférence supérieur à 1,5.

3. Moule (5) selon l'une quelconque des revendications 1 à 2, dans lequel le connecteur (30) s'étend selon un axe central (A) entre deux extrémités (31, 32) opposées au voisinage desquels les premier (51) et deuxième (52) orifices sont ménagés, les première (35) et deuxième (36) parties de connecteur s'étendant coaxialement selon l'axe central (A).

4. Moule (5) selon l'une quelconque des revendications 1 à 3 spécialement adapté pour réaliser une pièce en matière plastique thermodurcissable, ladite matière plastique thermodurcissable étant adaptée pour passer de manière irréversible d'un état fluide à un état solide par une réaction de polymérisation, ledit moule (5) comprenant un dispositif de chauffage (18) adapté pour chauffer au moins l'une des première (5a) et deuxième (5b) parties de moule.

5. Moule (5) selon l'une quelconque des revendications 1 à 4 spécialement adapté pour réaliser une pièce en matière plastique thermoplastique, ladite matière plastique thermoplastique étant adaptée pour passer de manière réversible d'un état fluide à un état solide par un refroidissement, ledit moule (5) comprenant un dispositif de refroidissement (19) adapté pour refroidir au moins l'une des première (5a) et deuxième (5b) parties de moule.

6. Connecteur (30) spécialement adapté pour être utilisé dans un moule (5) selon l'une quelconque des revendications 1 à 5, ledit connecteur (30) présentant une surface extérieure (33) et s'étendant entre une première partie de connecteur (35) et une deuxième partie de connecteur (36), ledit connecteur (30) comportant intérieurement au moins un conduit (50) s'étendant entre un premier orifice (51) débouchant sur la surface extérieure (33) de la première partie de connecteur (35), et un deuxième orifice (52) débouchant sur la surface extérieure (33) de la deuxième partie de connecteur (36), ledit connecteur (30) étant adapté pour réaliser des échanges thermiques entre le conduit (50) et la surface extérieure (33) dudit connecteur (30), ledit connecteur (30) étant en outre adapté pour être fixé de manière amovible au moule (5) de telle manière que la deuxième partie de connecteur (36) soit disposée dans un logement (12) dudit moule (5) avec la surface extérieure (33) de ladite deuxième partie de connecteur (36) en contact avec une surface intérieure (13) dudit logement (12) et le deuxième orifice (52) en communication avec un canal (14) débouchant dans ledit logement (12), et que la première partie de connecteur (35) soit disposée en dehors du logement (12),
dans lequel le conduit (50) comprend une pluralité de conduits élémentaires (55, 56), chacun desdits conduits élémentaires (55, 56) s'étendant selon un axe entre des première (55a, 56a) et deuxième (55b, 56b) extrémités opposées, chacun desdits conduits élémentaires (55, 56) étant délimité par une surface latérale autour dudit axe, la première extrémité (55a, 56a) présentant une section supérieure à celle de la deuxième extrémité (55b, 56b) et la surface latérale convergeant depuis la première extrémité (55a, 56a) vers la deuxième extrémité (55b, 56b), chacun desdits conduits élémentaires (55, 56) étant sécant à l'un des autres conduits élémentaires (55, 56)
ledit connecteur (30) étant **caractérisé en ce que** les première (55a, 56a) et deuxième (55b, 56b) extrémités de chacun desdits conduits élémentaires (55, 56) débouchent sur la surface extérieure (33) du connecteur (30).

7. Installation de moulage (1) comprenant :
- un bâti (2),
- un moule (5) selon l'une quelconque des revendications 1 à 5 monté sur le bâti (2), ledit moule (5) comprenant un logement d'injection (12), un canal d'injection (14) débouchant dans ledit logement d'injection (12) et un connecteur d'injection (30) fixé de manière amovible au moule (5) de telle manière que la deuxième partie de connecteur (36) dudit connecteur d'injection (30) soit disposée dans le logement d'injection (12),
- un dispositif d'injection (20) comprenant une tête d'injection (21) et adapté pour injecter de la matière plastique par la tête d'injection (21), ladite tête d'injection (21) étant montée sur le bâti (2) déplaçable par rapport au moule (5) entre une position d'injection, dans laquelle ladite tête d'injection (21) est connectée au premier orifice (51) du connecteur d'injection (30), et une position d'attente, dans laquelle ladite tête d'injection (21) est écartée du premier orifice (51) du connecteur d'injection (30).

8. Installation de moulage (1) selon la revendication 7, comprenant en outre une unité de commande électronique adaptée pour déplacer automatiquement la tête d'injection (21) entre ses positions d'injection et d'attente.

9. Installation de moulage (1) selon l'une quelconque des revendications 7 et 8, dans laquelle le moule (5) comprend en outre un logement d'éventation (15), un canal d'éventation (17) débouchant dans ledit logement d'éventation (15) et un connecteur d'éventation (30) fixé de manière amovible au moule (5) de telle manière que la deuxième partie de connecteur (36) dudit connecteur d'éventation (30) soit disposée dans le logement d'éventation (15),
ladite installation de moulage (1) comprenant en outre un dispositif d'éventation (25) comprenant une tête d'éventation (26) et adapté pour créer une aspiration par la tête d'éventation (26), ladite tête d'éventation (26) étant montée sur le bâti (2) déplaçable par rapport au moule (5) entre une position d'éventation, dans laquelle ladite tête d'éventation (26) est connectée au premier orifice (51) du connecteur d'éventation (30), et une position d'attente, dans laquelle ladite tête d'éventation (26) est écartée du premier orifice (51) du connecteur d'éventation (30).

10. Installation de moulage (1) selon la revendication 9 lorsqu'elle dépend de la revendication 8, dans laquelle l'unité de commande électronique est en outre adaptée pour déplacer automatiquement la tête d'éventation (26) entre ses positions d'éventation et d'attente.

11. Procédé de moulage mettant en oeuvre une installation de moulage (1) selon l'une quelconque des revendications 7 à 10, prévoyant successivement les étapes suivantes :
A- monter le moule (5) sur le bâti (2),
B- mettre les première (5a) et deuxième (5b) parties de moule dans la position de fermeture,
C- placer la tête d'injection (21) en position d'injection,
D- injecter de la matière plastique dans l'empreinte (11) par l'intermédiaire du connecteur d'injection (30),
E- déplacer la tête d'injection (21) vers la position d'attente,
F- retirer le connecteur d'injection (30), nettoyer le connecteur d'injection (30), et fixer à nouveau le connecteur d'injection (30) sur le moule (5).

12. Procédé de moulage selon la revendication 11, prévoyant en outre, parallèlement à l'étape F, de répéter les étapes A à E avec un autre moule (5).

13. Procédé de moulage selon l'une quelconque des revendications 11 et 12 lorsqu'elles dépendent de la revendication 4, prévoyant :
- au cours de l'étape D, d'injecter de la matière plastique thermodurcissable et de chauffer au moins l'une des première (5a) et deuxième (5b) parties de moule par l'intermédiaire du dispositif de chauffage (18),
- au cours de l'étape E, de déplacer la tête d'injection (21) vers la position d'attente lorsque la matière plastique thermodurcissable est passée à l'état solide dans la deuxième partie de connecteur (36) du connecteur d'injection (30), et que la matière plastique thermodurcissable est encore à l'état fluide dans la première partie de connecteur (35) du connecteur d'injection (30).

14. Procédé de moulage selon l'une quelconque des revendications 11 à 13 lorsqu'elles dépendent de la revendication 9, prévoyant en outre :
- au cours de l'étape C, de placer la tête d'éventation (26) en position d'éventation,
- au cours de l'étape D, d'aspirer la matière plastique dans l'empreinte (11) par l'intermédiaire du connecteur d'éventation (30),
- au cours de l'étape E, de déplacer la tête d'éventation (26) vers la position d'attente,
- au cours de l'étape F, de retirer le connecteur d'éventation (30), de nettoyer le connecteur d'éventation (30), et de fixer à nouveau le connecteur d'éventation (30) sur le moule (5).

15. Procédé de moulage selon la revendication 14 lorsqu'elle dépend de la revendication 13, prévoyant, au cours de l'étape E, de déplacer la tête d'éventation (26) vers la position d'attente lorsque la matière plastique thermodurcissable à l'état fluide atteint la tête d'éventation (26).

## Patentansprüche

1. Formwerkzeug (5) zur Herstellung eines Gegenstands aus Kunststoffmaterial, wobei das Formwerkzeug (5a) ein erstes (5a) und ein zweites (5b) Formwerkzeugteil mit jeweils einer Formfläche (10a, 10b) und einer Außenfläche aufweist, wobei das erste (5a) und das zweite (5b) Formwerkzeugteil an ihren Formflächen (10a, 10b) ausgesparte Prägeabschnitte (11a, 11b) haben und zueinander verschiebbar sind zwischen einer geöffneten Position, in welcher die Formflächen (10a, 10b) in einem Abstand voneinander angeordnet sind, und einer geschlossenen Position, in welcher die Formflächen (10a, 10b) in Kontakt miteinander sind und in welcher die Prägeabschnitte (11a, 11b) einen dem herzustellenden Gegenstand entsprechenden Prägeraum (1) zur Aufnahme des Kunststoffinaterials begrenzen, wobei zumindest das erste Formwerkzeugteil (5a) mindestens einen Kanal (14) aufweist, der in den Prägeabschnitt (11a) mündet,
wobei zumindest das erste Formwerkzeugteil (5a) außerdem mindestens eine Aufnahme (12) aufweist, welche in der Außenfläche des ersten Formwerkzeugteils (5a) ausgespart ist und welche eine Innenfläche (13) aufweist, in welche der Kanal (14) mündet,
wobei das Formwerkzeug (5) außerdem mindestens ein Verbindungselement (30) aufweist, das eine Außenfläche (33) hat und sich zwischen einem ersten Verbindungselementabschnitt (35) und einem zweiten Verbindungselementabschnitt (36) erstreckt, wobei das Verbindungselement (30) im Innern mindestens ein Rohr (50) aufweist, das sich zwischen einer ersten Öffnung (51), die an der Außenfläche des ersten Verbindungselementabschnitts (35) mündet, und einer zweiten Öffnung (52), die an der Außenfläche des zweiten Verbindungselementabschnitts (36) mündet, erstreckt, wobei das Verbindungselement (30) angepasst ist, einen Wärmeaustausch zwischen dem Rohr (50) und der Außenfläche (33) des Verbindungselements (30) bereitzustellen, wobei das Verbindungselement (30) außerdem auflösbare Weise an dem Formwerkzeug (5) derart angebracht werden kann, dass der zweite Verbindungselementabschnitt (36) in der Aufnahme (12) angeordnet ist, wobei die Außenfläche (33) des zweiten Verbindungselementabschnitts (36) in Kontakt mit der Innenfläche (13) der Aufnahme (12) ist und die zweite Öffnung (52) in Verbindung mit dem Kanal (14) ist, und derart, dass der erste Verbindungselementabschnitt (35) außerhalb der Aufnahme (12) angeordnet ist,
wobei das Rohr (50) des Verbindungselements (30) mehrere Hauptrohre (55,56) aufweist, welche sich jeweils entlang einer Achse zwischen gegenüberliegenden ersten (55a,56a) und zweiten (55b, 56b) Enden erstrecken und welche jeweils von einer die Achse umgebenden Seitenfläche begrenzt sind, wobei das erste Ende (55a,56a) einen Querschnitt aufweist, der größer ist als derjenige des zweiten Endes (55b,56b), und wobei sich die Seitenfläche vom ersten Ende (55a,56a) zum zweiten Ende (55b,56b) hin verjüngt, wobei jedes der Hauptrohre (55,56) sich mit einem der anderen Hauptrohre (55,56) kreuzt,
wobei das Formwerkzeug (5) **dadurch gekennzeichnet ist, dass** die ersten (55a, 56a) und zweiten (55b,56b) Enden jedes der Hauptrohre (55,56) an der Außenfläche (33) des Verbindungselements (30) münden.

2. Formwerkzeug (5) nach Anspruch 1, in welchem der erste Verbindungselementabschnitt (35) eine Achse (A), eine Länge (L), gemessen entlang der Achse (A), und eine transversale Abmessung (D1), gemessen senkrecht zur Achse (A), aufweist, wobei der erste Verbindungselementabschnitt (35) mindestens einen Teil (37) und vorzugsweise einen wesentlichen Teil aufweist, der ein Verhältnis der Länge (L) zur transversalen Abmessung (D1) von mehr als 1 und vorzugsweise mehr als 1,5 hat.

3. Formwerkzeug nach einem der Ansprüche 1 bis 2, in welchem das Verbindungselement (30) sich entlang einer zentralen Achse (A) zwischen zwei gegenüberliegenden Enden (31,32) erstreckt, in deren Nähe die erste (51) und zweite (52) Öffnung ausgespart sind, wobei der erste (35) und zweite (36) Verbindungselementabschnitt sich koaxial entlang der zentralen Achse (A) erstrecken.

4. Formwerkzeug (5) nach einem der Ansprüche 1 bis 3, das speziell angepasst ist, einen Gegenstand aus einem duroplastischen Kunststoffmaterial herzustellen, wobei das duroplastische Kunststoffmaterial durch eine Polymerisationsreaktion auf irreversible Weise von einem fluiden Zustand in einen festen Zustand übergehen kann, wobei das Formwerkzeug (5) eine Heizvorrichtung (18) zum Heizen des ersten (5a) und/oder zweiten (5b) Formwerkzeugteils aufweist.

5. Formwerkzeug (5) nach einem der Ansprüche 1 bis 4, das speziell angepasst ist, einen Gegenstand aus einem thermoplastischen Kunststoffmaterial herzustellen, wobei das thermoplastische Kunststoffmaterial durch Abkühlen auf reversible Weise von einem fluiden Zustand in einen festen Zustand übergehen kann, wobei das Formwerkzeug (5) eine Kühlvorrichtung (19) zum Kühlen des ersten (5a) und/oder zweiten (5b) Formwerkzeugteils aufweist.

6. Verbindungselement (30), das speziell angepasst ist, um in einem Formwerkzeug (5) nach einem der Ansprüche 1 bis 5 verwendet zu werden, wobei das Verbindungselement (30) eine Außenfläche (33) aufweist und sich zwischen einem ersten Verbindungselementabschnitt (35) und einem zweiten Verbindungselementabschnitt (36) erstreckt, wobei das Verbindungselement (30) im Innern mindestens ein Rohr (50) aufweist, das sich zwischen einer ersten Öffnung (51), die an der Außenfläche des ersten Verbindungselementabschnitts (35) mündet, und einer zweiten Öffnung (52), die an der Außenfläche des zweiten Verbindungselementabschnitts (36) mündet, erstreckt, wobei das Verbindungselement (30) angepasst ist, einen Wärmeaustausch zwischen dem Rohr (50) und der Außenfläche (33) des Verbindungselements (30) bereitzustellen, wobei das Verbindungselement (30) außerdem auf lösbare Weise an dem Formwerkzeug (5) derart angebracht werden kann, dass der zweite Verbindungselementabschnitt (36) in einer Aufnahme (12) des Formwerkzeugs (5) angeordnet ist, wobei die Außenfläche (33) des zweiten Verbindungselementabschnitts (36) in Kontakt mit einer Innenfläche (13) der Aufnahme (12) ist und die zweite Öffnung (52) in Verbindung mit einem in die Aufnahme (12) mündenden Kanal (14) ist, und derart, dass der erste Verbindungselementabschnitt (35) außerhalb der Aufnahme (12) angeordnet ist,
wobei das Rohr (50) mehrere Hauptrohre (55,56) aufweist, welche sich jeweils entlang einer Achse zwischen gegenüberliegenden ersten (55a,56a) und zweiten (55b,56b) Enden erstrecken und welche jeweils von einer die Achse umgebenden Seitenfläche begrenzt sind, wobei das erste Ende (55a,56a) einen Querschnitt aufweist, der größer ist als derjenige des zweiten Endes (55b,56b), und wobei sich die Seitenfläche vom ersten Ende (55a,56a) zum zweiten Ende (55b,56b) hin verjüngt, wobei jedes der Hauptrohre (55,56) sich mit einem der anderen Hauptrohre (55,56) kreuzt,
wobei das Verbindungselement (30) **dadurch gekennzeichnet ist, dass** die ersten (55a,56a) und zweiten (55b,56b) Enden jedes der Hauptrohre (55,56) an der Außenfläche (33) des Verbindungselements (30) münden.

7. Formgussanlage (1) mit
- einem Rahmen (2),
- einem an dem Rahmen (2) angebrachten Formwerkzeug (5) nach einem der Ansprüche 1 bis 5, wobei das Formwerkzeug (5) eine Einspritzaufnahme (12), einen in die Einspritzaufnahme (12) mündenden Einspritzkanal (14) und ein Einspritzverbindungselement (30) aufweist, das auf lösbare Weise an dem Formwerkzeug (5) derart angebracht ist, dass der zweite Verbindungselementabschnitt (36) des Einspritzverbindungselements (30) in der Einspritzaufnahme (12) angeordnet ist,
- einer Einspritzvorrichtung (20) mit einem Einspritzkopf (21) zum Einspritzen von Kunststoffmaterial, wobei der Einspritzkopf (21) an dem Rahmen (2) angebracht ist und bezüglich des Formwerkzeugs (5) verschiebbar ist zwischen einer Einspritzposition, in welcher der Einspritzkopf (21) mit der ersten Öffnung (51) des Einspritzverbindungselements (30) verbunden ist, und einer Warteposition, in welcher der Einspritzkopf (21) im Abstand von der ersten Öffnung (51) des Einspritzverbindungselements (30) angeordnet ist.

8. Formgussanlage (1) nach Anspruch 7, außerdem mit einer elektronischen Steuerungseinheit zum automatischen Verschieben des Einspritzkopfs (21) zwischen seiner Einspritz- und Warteposition.

9. Formgussanlage (1) nach einem der Ansprüche 7 und 8, in welcher das Formwerkzeug (5) außerdem eine Absaugaufnahme (15), einen in die Absaugaufnahme (15) mündenden Absaugkanal (17) und ein Absaugverbindungselement (30) aufweist, das auf lösbare Weise an dem Formwerkzeug (5) angebracht ist, derart, dass der zweite Verbindungselementabschnitt (36) des Absaugverbindungselements (30) in der Absaugaufnahme (15) angeordnet ist,
wobei die Formgussanlage (1) außerdem eine Absaugvorrichtung (25) mit einem Absaugkopf (26) zum Erzeugen eines Sogs aufweist, wobei der Absaugkopf (26) an dem Rahmen (2) angebracht ist und bezüglich des Formwerkzeugs (5) verschiebbar ist zwischen einer Absaugposition, in welcher der Absaugkopf (26) mit der ersten Öffnung (51) des Absaugverbindungselements (30) verbunden ist, und einer Warteposition, in welcher der Absaugkopf (26) im Abstand von der ersten Öffnung (51) des Absaugverbindungselements (30) angeordnet ist.

10. Formgussanlage (1) nach Anspruch 9, sofern abhängig von Anspruch 8, in welcher die elektronische Steuerungseinheit ferner angepasst ist, um den Absaugkopf (26) zwischen seiner Absaug- und Warteposition automatisch zu verschieben.

11. Formgussverfahren unter Verwendung einer Formgussanlage (1) nach einem der Ansprüche 7 bis 10, wobei das Verfahren der Reihe nach die folgenden Schritte vorsieht:
A- Anbringen des Formwerkzeugs (5) an dem Rahmen (2),
B - Stellen des ersten (5a) und zweiten (5b) Formwerkzeugteils in die Schließposition,
C - Stellen des Einspritzkopfs (21) in die Einspritzposition,
D - Einspritzen von Kunststoffmaterial über das Einspritzverbindungselement (30) in den Prägeraum (11),
E - Verschieben des Einspritzkopfs (21) in die Warteposition,
F - Zurückziehen des Einspritzverbindungselements (30), Reinigen des Einspritzverbindungselements (30) und erneutes Anbringen des Einspritzverbindungselements (30) an dem Formwerkzeug (5).

12. Formgussverfahren nach Anspruch 11, das außerdem vorsieht, parallel zum Schritt F die Schritte A bis E mit einem anderen Formwerkzeug (5) zu wiederholen.

13. Formgussverfahren nach einem der Ansprüche 11 und 12, sofern abhängig von Anspruch 4, wobei das Verfahren vorsieht:
- im Verlaufe des Schritts D: Einspritzen von duroplastischem Kunststoffmaterial und Heizen des ersten (5a) und/oder zweiten (5b) Formwerkzeugteils mit Hilfe der Heizvorrichtung (18),
- im Verlaufe des Schritts E: Verschieben des Einspritzkopfs (21) in die Warteposition, wenn das duroplastische Kunststoffmaterial in dem zweiten Verbindungselementabschnitt (36) des Einspritzverbindungselements (30) in den festen Zustand übergegangen ist und wenn das duroplastische Kunststoffmaterial in dem ersten Verbindungselementabschnitt (35) des Einspritzverbindungselements (30) noch in dem fluiden Zustand ist.

14. Formgussverfahren nach einem der Ansprüche 11 bis 13, sofern abhängig von Anspruch 9, wobei das Verfahren außerdem vorsieht:
- im Verlaufe des Schritts C: Stellen des Absaugkopfs (26) in die Absaugposition,
- im Verlaufe des Schritts D: Absaugen des Kunststoffmaterials in dem Prägeraum (15) über das Absaugverbindungselement (30),
- im Verlaufe des Schritts E: Verschieben des Absaugkopfs (26) in die Warteposition,
- im Verlaufe des Schritts F: Zurückziehen des Absaugverbindungselements (30), Reinigen des Absaugverbindungselements (30) und erneutes Anbringen des Absaugverbindungselements (30) an dem Formwerkzeug (5).

15. Formgussverfahren nach Anspruch 14, sofern abhängig von Anspruch 13, wobei das Verfahren vorsieht, im Verlaufe des Schritts E den Absaugkopf (26) in die Warteposition zu verschieben, wenn das duroplastische Kunststoffmaterial im fluiden Zustand den Absaugkopf (26) erreicht.

## Claims

1. Mould (5) for producing a plastic part, comprising first (5a) and second (5b) mould parts each having a moulding surface (10a, 10b) and an outer surface, said first (5a) and second (5b) mould parts respectively comprising cavity parts (11a, 11b) formed on the moulding surfaces (10a, 10b) thereof, said first (5a) and second (5b) mould parts being movable in relation to one another between an opening position wherein the moulding surfaces (10a, 10b) are at a distance from one another, and a closing position wherein the moulding surfaces (10a, 10b) are in contact with one another and wherein the cavity parts (11a, 11b) define a cavity (11) shaped according to the part to be produced and suitable for receiving the plastic, at least the first mould part (5a) comprising at least one channel (14) opening into the mould part (11a),
wherein at least the first mould part (5a) further comprises at least one recess (12) formed on the outer surface of said first mould part (5a), said recess (12) having an inner surface (13) wherein the channel (14) opens,
and wherein the mould (5) further comprises at least one connector (30) having an outer surface (33) and extending between a first connector part (35) and a second connector part (36), said connector (30) comprising internally at least one conduit (50) extending between a first orifice (51) opening onto the outer surface of the first connector part (35), and a second orifice (52) opening onto the outer surface of the second connector part (36), said connector (30) being suitable for creating heat exchanges between the conduit (50) and the outer surface (33) of said connector (30), said connector (30) being further suitable for being removably attached to the mould (5) such that the second connector part (36) is arranged in the recess (12) with the outer surface (33) of said second connector part (36) in contact with the inner surface (13) of said recess (12) and the second orifice (52) communicating with the channel (14), and that the first connector part (35) is arranged outside the recess (12), wherein the conduit (50) of the connector (30) comprises a plurality of basic conduits (55, 56), each of said basic conduits (55, 56) extending along an axis between the first (55a, 55b) and second (55b, 56b) opposite ends, each of said basic conduits (55, 56) being defined by a lateral surface about said axis, the first end (55a, 56a) having a cross-section greater than that of the second end (55b, 56b) and the lateral surface converging from the first end (55a, 56a) towards the second end (55b, 56b), each of said basic conduits (55, 56) being secant to one of the other basic conduits (55, 56)
said mould (5) being **characterised in that** the first (55a, 56a) and second (55b, 56b) ends of each of said basic conduits (55, 56) open onto the outer surface (33) of the connector (30).

2. Mould (5) according to claim 1, wherein the first connector part (35) has an axis (A), a length (L) measured along said axis (A) and a transverse dimension (D1) measured perpendicularly to said axis (A), the first connector part (35) comprising at least one portion (37), preferably an essential portion, having a ratio of the length (L) over the transverse dimension (D1) greater than 1, preferably greater than 1.5.

3. Mould (5) according to any of claims 1 to 2, wherein the connector (30) extends along a central axis (A) between two opposite ends (31, 32) in the vicinity whereof the first (51) and second (52) orifices are formed, the first (35) and second (36) connector parts extending coaxially along the central axis (A).

4. Mould (5) according to any of claims 1 to 3 particularly suitable for producing a thermosetting plastic part, said thermosetting plastic being suitable for changing irreversibly from a fluid state to a solid state by means of a polymerisation reaction, said mould (5) comprising a heating device (18) suitable for heating at least one of the first (5a) and second (5b) mould parts.

5. Mould (5) according to any of claims 1 to 4 particularly suitable for producing a thermoplastic plastic part, said thermoplastic plastic being suitable for changing irreversibly from a fluid state to a solid state by means of cooling, said mould (5) comprising a cooling device (19) suitable for cooling at least one of the first (5a) and second (5b) mould parts.

6. Connector (30) particularly suitable for use in a mould (5) according to any of claims 1 to 5, said connector (30) having an outer surface (33) and extending between a first connector part (35) and a second connector part (36), said connector (30) comprising internally at least one conduit (50) extending between a first orifice (51) opening onto the outer surface (33) of the first connector part (35), and a second orifice (52) opening onto the outer surface (33) of the second connector part (36), said connector (30) being suitable for creating heat exchanges between the conduit (50) and the outer surface (33) of said connector (30), said connector (30) being further suitable for being removably attached to the mould (5) such that the second connector part (36) is arranged in a recess (12) of said mould (5) with the outer surface (33) of said second connector part (36) in contact with the inner surface (13) of said recess (12) and a second orifice (52) communicating with a channel (14) opening into said recess (12), and that the first connector part (35) is arranged outside the recess (12),
wherein the conduit (50) of the connector (30) comprises a plurality of basic conduits (55, 56), each of said basic conduits (55, 56) extending along an axis between the first (55a, 55b) and second (55b, 56b) opposite ends, each of said basic conduits (55, 56) being defined by a lateral surface about said axis, the first end (55a, 56a) having a cross-section greater than that of the second end (55b, 56b) and the lateral surface converging from the first end (55a, 56a) towards the second end (55b, 56b), each of said basic conduits (55, 56) being secant to one of the other basic conduits (55, 56)
said connector (30) being **characterised in that** the first (55a, 56a) and second (55b, 56b) ends of each of said basic conduits (55, 56) open onto the outer surface (33) of the connector (30).

7. Moulding installation (1) comprising:
- a frame (2),
- a mould (5) according to any of claims 1 to 5 mounted on the frame (2), said mould (5) comprising an injection recess (12), an injection channel (14) opening into said injection recess (12) and an injection connector (30) removably attached to the mould (5) such that the second connector part (36) of said injection connector (30) is arranged in the injection recess (12),
- an injection device (20) comprising an injection head (21) and suitable for injecting plastic via the injection head (21), said injection head (21) being mounted on the frame (2) movable in relation to the mould (5) between an injection position, wherein said injection head (21) is connected to the first orifice (51) of the injection connector (30), and a standby position, wherein said injection head (21) is moved away from the first orifice (51) of the injection connector (30).

8. Moulding installation (1) according to claim 7, further comprising an electronic control unit suitable for moving the injection head (21) automatically between the injection and standby positions thereof.

9. Moulding installation (1) according to any of claims 7 and 8, wherein the mould (5) further comprises a venting recess (15), a venting channel (17) opening into said venting recess (15) and a venting connector (30) removably attached to the mould (5) such that the second connector part (36) of said venting connector (30) is arranged in the venting recess (15),
said moulding installation (1) further comprising a venting device (25) comprising a venting head (26) and suitable for creating a suction via the venting head (26), said venting head (26) being mounted on the frame (2) movable in relation to the mould (5) between a venting position, wherein said venting head (26) is connected to the first orifice (51) of the venting connector (30), and a standby position, wherein said venting head (26) is moved away from the first orifice (51) of the venting connector (30).

10. Moulding installation (1) according to claim 9 when it is dependent on claim 8, wherein the electronic control unit is further suitable for moving the venting head (26) automatically between the venting and standby positions thereof.

11. Moulding method using a moulding installation (1) according to any of claims 7 to 10, successively envisaging the following steps:
A- mounting the mould (5) on the frame (2),
B- placing the first (5a) and second (5b) mould parts in the closing position,
C- placing the injection head (21) in the injection position,
D- injecting plastic into the cavity (11) via the injection connector (30),
E- moving the injection head (21) to the standby position,
F- removing the injection connector (30), cleaning the injection connector (30), and reattaching the injection connector (30) to the mould (5).

12. Moulding method according to claim 11, further envisaging, in parallel with step F, repeating steps A to E with another mould (5).

13. Moulding method according to any of claims 11 and 12 when they are dependent on claims 4, envisaging:
- during step D, injecting the thermosetting plastic and heating at least one of the first (5a) and second (5b) mould parts by means of the heating device (18),
- during step E, moving the injection head (21) to the standby position when the thermosetting plastic has changed to the solid state in the second connector part (36) of the injection connector (30), and the thermosetting plastic is still in the fluid state in the first connector part (35) of the injection connector (30).

14. Moulding method according to any of claims 11 to 13 when they are dependent on claims 9, further envisaging:
- during step C, placing the venting head (26) in the venting position,
- during step D, aspirating the plastic into the cavity (11) via the venting connector (30),
- during step E, moving the venting head (26) to the standby position,
- during step F, removing the venting connector (30), cleaning the venting connector (30), and reattaching the venting connector (30) onto the mould (5).

15. Moulding method according to claim 14 when it is dependent on claim 13, envisaging, during step E, moving the venting head (26) to the standby position when the thermosetting plastic in the fluid state reaches the venting head (26).
